# EUROPÄISCHE PATENTANMELDUNG

(11) **EP 4 568 061 A2**
(43) Veröffentlichungstag der Anmeldung: **11.06.2025**
(21) Anmeldenummer: 24217999.2
(22) Anmeldetag: 06.12.2024
(51) Int. Cl.: H02J 7/00, H01R 31/06

(54) **LADEEINRICHTUNG FÜR MOBILES ENDGERÄT**

(30) Priorität: 07.12.2023 DE 102023134315
(71) Anmelder: Deutsche Telekom AG, 53113 Bonn (DE)
(72) Erfinder: MÜLLER, Fabian, 51519 Odenthal (DE); VOTH, Leonard, 52385 Nideggen (DE)
(74) Vertreter: Maucher Jenkins Patent- und Rechtsanwälte

(57) **Zusammenfassung**

Die Erfindung betrifft eine zum Laden eines Akkumulators in einem mobilen Endgerät MEG dienende Ladeeinrichtung, mit einem Netzstecker und einem Netzteil, einem zu einer Anschlussbuchse des MEG kompatiblen Geräteanschlussstecker GAS (1) und einem mehradrigen Kabel (2). Die Verbindung zwischen dem Kabel (2) und dem GAS (1) ist über einen mit ihnen lösbar verbundenen Verbinder (3) hergestellt. Der zu öffnende Verbinder (3) weist in seinem Inneren galvanische Kontakte (8) zur elektrischen Verbindung eines in diesen eingelegten und mit abisolierten Enden seiner Adern (4) auf diese galvanischen Kontakte (8) aufgelegten Kabelendes sowie galvanische Kontakte (8') zur elektrischen Verbindung des in den Verbinder (3) eingelegten und mit am verbinderseitigen Ende ausgebildeten Kontaktpunkten auf diese galvanischen Kontakte (8') aufgelegten GAS (1) auf. Das Kabelende und der GAS (1) werden mittels an ihnen ausgebildeter sowie jeweils mit komplementären im Inneren des Verbinders (3) ausgebildeten Halteelementen (10, 10') in Eingriff gebrachter Haltelemente (9, 9') am Verbinder (3) fixiert.

## Beschreibung

Die Erfindung betrifft eine Ladeeinrichtung zum Laden eines von einem mobilen Endgerät (im Weiteren auch MEG) aufgenommenen, nämlich auch während des Ladevorgangs in dem MEG verbleibenden Akkumulators, welcher das MEG mit Energie für seinen Betrieb versorgt. Gattungsgemäße Ladeeinrichtungen dienen dem Aufladen von Akkumulatoren, wie sie beispielsweise in Mobiltelefonen respektive Smartphones, in Tablet-PCs oder in Laptops zum Einsatz kommen. Sie umfassen typischerweise einen Netzstecker, einen gerätespezifischen, zu einer Anschlussbuchse des jeweiligen mobilen Endgeräts kompatiblen Geräteanschlussstecker (im Weiteren GAS) und ein den GAS mit einem üblicherweise in dem Netzstecker angeordneten Netzteil verbindendes Kabel.

Insbesondere im Zusammenhang mit der seit Beginn dieses Jahrhunderts stark zunehmenden Verbreitung von Mobiltelefonen respektive Smartphones kamen zunächst Ladeeinrichtungen mit einem hinsichtlich der eingangs genannten wesentlichen Komponenten weitgehend identischen, aber im Detail sehr unterschiedlichen Aufbau auf den Markt. Die Unterschiedlichkeit im Detail resultierte daraus, dass die Anschlussbuchsen der Mobiltelefone und später auch anderer mobiler Endgeräte in Bezug auf ihre mechanische Form und die Anschlussbelegung proprietär, das heißt herstellerspezifisch, ausgebildet waren. Dies führte dazu, dass eine mit einem mobilen Endgerät mitgelieferte Ladeeinrichtung der vorbeschriebenen Art in der Regel ausschließlich für Endgeräte desselben Typs, zumindest aber meist nicht für Endgeräte anderer Hersteller verwendbar war.

In Bezug auf die Anschlussbuchsen der mobilen Endgeräte hat sich in dieser Hinsicht aufgrund erfolgter Standardisierungen im Laufe der Zeit eine deutliche Verbesserung eingestellt. So haben sich geräteseitig bei mobilen Endgeräten mehrheitlich einige wenige Anschlussarten, wie Mini- oder Micro-USB-Anschlüsse, USB-C-Anschlüsse, Lightning-Anschlüsse und Thunderbolt-Anschlüsse, etabliert. Dies hat natürlich auch zu einer entsprechenden Vereinheitlichung bei den GAS der hier in Rede stehenden Ladeeinrichtungen geführt.

Allerdings gibt es auch auf der anderen Seite entsprechender Ladeeinrichtungen, nämlich hinsichtlich des üblicherweise das Schaltnetzteil zur Erzeugung einer Gerätekleinspannung aufnehmenden Netzsteckers, teilweise Unterschiede, welche in der Regel durch nationale Standards bedingt sind. Dem ist man dadurch begegnet, dass das den GAS mit dem Schaltnetzteil respektive mit dem Netzstecker verbindende Anschlusskabel inzwischen nicht mehr wie früher fest mit dem Netzstecker respektive mit einem in diesen integrierten Netzteil verbunden ist, sondern mit diesem über eine Mini-USB- oder Micro-USB- oder eine USB-C-Steckverbindung lösbar verbunden wird. Hierdurch ist es ganz einfach, das Anschlusskabel mit einem in dem jeweiligen Land benötigten Netzstecker mit Schaltnetzteil zu verbinden.

Bis heute ist allerdings so, dass der gerätespezifische GAS üblicherweise starr mit dem Anschlusskabel verbunden respektive an dieses angegossen ist. Zwar hat man die Bemühungen vorangetrieben, die GAS in Bezug auf Endgeräte unterschiedlicher Hersteller noch weiter zu vereinheitlichen, wobei zum Beispiel ab dem Jahr 2025 in der EU für Smartphones ein einheitliches Verbindungssystem mit einem GAS vom Typ USB-C vorgeschrieben ist. Jedoch ist es im Falle eines Kabelbruchs dann immer noch erforderlich, die aus dem Anschlusskabel und dem GAS gebildete Einheit in Gänze wegzuwerfen. Umgekehrt ist im Falle einer Beschädigung des GAS zusammen mit diesem auch das Anschlusskabel zu entsorgen. Dies verursacht jedoch unnötige Kosten und ist insbesondere unter Umweltgesichtspunkten wenig nachhaltig.

Aufgabe der Erfindung ist es daher, eine alternative Ladeeinrichtung für mobile Endgeräte zur Verfügung zu stellen, welche die vorgenannten Nachteile vermeidet. Die entsprechende Ladeeinrichtung soll dabei so gestaltet sein, dass sich durch ihren Einsatz eine Reduktion der Kosten und eine Verbesserung im Hinblick auf umweltbezogene Nachhaltigkeit ihrer Verwendung ergibt.

Die Aufgabe wird durch eine Ladeeinrichtung mit den Merkmalen des Patentanspruchs 1 gelöst. Vorteilhafte Aus- und Weiterbildungen dieser Ladeeinrichtung sind durch die Unteransprüche gegeben.

Auch die zur Lösung der Aufgabe vorgeschlagene Ladeeinrichtung, nämlich eine Ladeeinrichtung zur Ladung eines von einem mobilen Endgerät MEG aufgenommenen Akkumulators, ist zunächst insoweit in üblicher Weise aufgebaut, als sie folgende Komponenten umfasst:
- einen Netzstecker und ein Netzteil zur Wandlung einer dem Netzteil über den Netzstecker zugeführten Netzspannung in eine Gerätekleinspannung, wobei es sich bei dem Netzteil typischerweise um ein Schaltnetzteil handeln wird, so dass im Weiteren meist von einem Schaltnetzteil gesprochen wird.
- einen gerätespezifischen, zu einer Anschlussbuchse des mobilen Endgeräts mechanisch und elektrisch kompatiblen Geräteanschlussstecker GAS,
- ein mehradriges Anschlusskabel zur elektrischen Verbindung eines Ausgangs des Netzteils/Schaltnetzteils mit dem GAS.

Hierbei ist das Schaltnetzteil vorzugsweise in dem vorstehend genannten Netzstecker angeordnet. Darüber hinaus kann das Anschlusskabel mit dem Netzstecker respektive mit dem Schaltnetzteil über einen standardisierten Stecker, wie beispielsweise einen USB-Stecker oder einen USB-C-Stecker, verbunden sein.

Ausdrücklich sei an dieser Stelle nochmals darauf hingewiesen, dass die hier vorgeschlagene Lösung eine Ladeeinrichtung betrifft, die für eine Konstellation vorgesehen ist, bei welcher der zu ladende Akkumulator während des Ladevorgangs in dem MEG verbleibt, der Akkumulator also innerhalb des Endgeräts (MEG) geladen wird.

Zur Lösung der Aufgabe ist die vorgeschlagene Ladeeinrichtung noch modularer als bisher respektive in besonderer Weise modular ausgebildet. Entsprechend dem insoweit zum Einsatz kommenden Modularitätsansatz ist die Verbindung zwischen dem Kabel (Anschlusskabel) und dem GAS über einen sowohl mit dem Kabel als auch mit dem GAS lösbar verbundenen Verbinder hergestellt. Dieser Verbinder weist an einer ersten Seite eine Kabeleinführung und an einer anderen Seite, vorzugsweise an der gegenüberliegenden oder an einer zur ersten Seite orthogonalen Seite, eines Verbindergehäuses eine Durchführung für den aus dem Verbinder herausragenden GAS auf. Der genannte, wie gesagt lösbar mit dem Verbinder gekoppelte (verbundene) und insoweit in Anpassung an das jeweilige MEG und dessen Anschlussbuchse austauschbare GAS ragt hierbei zur Herstellung einer Verbindung mit der Anschlussbuchse des MEG mit seinem geräteseitigen Ende aus dem Verbinder respektive dem Verbindergehäuse heraus.

Der Verbinder selbst weist ein Ver- und Entriegelungselement auf, durch dessen Entriegelung der Verbinder respektive sein Gehäuse geöffnet werden kann. Er weist ferner in seinem Inneren galvanische Kontakte zur elektrischen Verbindung einerseits mit dem Anschlusskabel und andererseits mit dem GAS auf. Bei geöffnetem Verbinder erfolgt dessen elektrische Verbindung mit dem Anschlusskabel durch das Einlegen eines Endes des Anschlusskabels im Bereich der Kabeleinführung und durch das Auflegen abisolierter Enden der Adern des Anschlusskabels auf die dafür im Inneren des Verbinders vorgesehenen galvanischen Kontakte.

In korrespondierender Weise wird der jeweilige, also der zur Anschlussbuchse des MEG kompatible GAS im Bereich der dafür vorgesehenen Durchführung in den geöffneten Verbinder eingelegt und dabei mit an seinem verbinderseitigen Ende ausgebildeten Kontaktpunkten auf entsprechende galvanische Kontakte im Inneren des Verbinders aufgelegt und hierdurch mit diesem elektrisch verbunden.

Nach der in der vorbeschriebenen Weise erfolgenden elektrischen Verbindung des Kabelendes und des GAS mit dem Verbinder wird der Verbinder geschlossen. Hierbei werden sowohl das Kabelende als auch der GAS respektive dessen verbinderseitiges Ende mechanisch an dem Verbinder fixiert. Eine insoweit zuverlässige mechanische Verbindung respektive Fixierung des Kabelendes und des GAS wird hierbei dadurch gewährleistet, dass sowohl an dem Kabelende als auch an dem verbinderseitigen Ende des GAS Halteelemente ausgebildet sind, welche beim Einlegen des Kabelendes und des GAS in den Verbinder mit in dessen Innerem ausgebildeten komplementären Halteelementen in Eingriff gebracht werden.

Der vorgeschlagene modulare Aufbau der Ladeeinrichtung hat den Vorteil, dass auch bei künftig sicherlich noch weiterhin bestehenden unterschiedlichen geräteseitigen Anschlusskonzepten respektive beim Vorhandensein unterschiedlicher Anschlussbuchsen an mobilen Endgeräten eine flexible Anpassung der Ladeeinrichtung möglich ist. Hierzu ist es lediglich erforderlich, den genannten Verbinder zu öffnen und den vom Typ her jeweils benötigten GAS in den Verbinder einzulegen sowie diesen in der beschriebenen Weise mit dem Verbinder elektrisch zu kontaktieren. Zudem muss im Falle eines eventuellen Kabelbruchs nicht auch der GAS mit entsorgt werden. Umgekehrt reicht es im Falle einer Beschädigung des GAS aus, lediglich diesen auszutauschen, wohingegen das Anschlusskabel weiterhin verwendet werden kann. Hieraus ergeben sich Kosteneinsparungen und, entsprechend der gestellten Aufgabe, Vorteile hinsichtlich der umweltbezogenen Nachhaltigkeit des Systems.

Der bisherigen Beschreibung folgend, ist sicherlich die spezielle lösbare Verbindung von Anschlusskabel, Verbinder und (gerätespezifischen) GAS als ein wesentliches Feature der Ladeeinrichtung anzusehen, welches dieser, wie schon angesprochen, eine gegenüber dem Stand der Technik erweiterte Modularität verleiht. Mit Blick auf dieses Feature könnte auch von einem modularen Ladekabel gesprochen werden. Jedoch sind weder der GAS und der nachfolgend angesprochene, vorzugweise vorhandene Controller im wörtlichen Sinne Teile eines Kabels noch wird der Akkumulator eines über den GAS angeschlossenen MEG durch das Kabel selbst aufgeladen. Das ist auch der Grund, warum hier dieses Feature nicht in dieser Weise bezeichnet sowie im Kontext mit den weiteren Komponenten (Netzstecker, Netzteil) als Ladeeinrichtung beschrieben und beansprucht wird.

Wie die meisten der derzeit im Einsatz befindlichen Ladeeinrichtungen für mobile Endgeräte weist auch die Ladeeinrichtung gemäß der vorgeschlagenen Lösung vorzugsweise einen Controller zur Begrenzung und Überwachung des Ladestroms für einen jeweiligen, mittels der Ladeeinrichtung zu ladenden Akkumulator auf. Gegebenenfalls kann der Controller auch noch weitere Aufgaben und Funktionen erfüllen, wie beispielsweise die Erkennung des jeweiligen Typs des den zu ladenden Akkumulator aufnehmenden MEG.

Bei den Ladeeinrichtungen nach dem Stand der Technik ist der vorgenannte Controller - es handelt sich hierbei um eine Schaltung geringer Komplexität - in der Regel in dem an das Anschlusskabel angegossenen GAS angeordnet. Bei der erfindungsgemäßen Lösung kann ein solcher Controller vorzugsweise innerhalb des Verbinders angeordnet sein, zumal bereits verfügbare einzelne GAS - sogenannte Platinenstecker, beispielsweise Platinenstecker vom Typ USB oder USB-C - üblicherweise nicht mit einem entsprechenden Controller ausgestattet sind. Dies hängt damit zusammen, dass die genannten Platinenstecker, wie bereits aus ihrer Bezeichnung hervorgeht, zur Verbindung mit Geräteplatinen vorgesehen sind, auf welchen entsprechende elektronische Einheiten, wie unter anderem gegebenenfalls entsprechende Controller, typischerweise bereits vorhanden sind.

Daher ist, wie bereits ausgeführt, ein entsprechender Controller bei der vorgeschlagenen Ladeeinrichtung vorzugsweise in dem Verbinder zur Verbindung von Anschlusskabel und GAS respektive als Bestandteil, vorzugsweise integraler Bestandteil des Verbinders ausgebildet. Der Controller ist hierbei auf einer Seite elektrisch mit den zur Kontaktierung des Kabelendes dienenden galvanischen Kontakten des Verbinders und auf der anderen Seite mit den zur elektrischen Verbindung des Verbinders mit dem GAS vorgesehenen galvanischen Kontakten verbunden.

Die vorgeschlagene Ladeeinrichtung kann ferner noch dadurch vorteilhaft weitergebildet sein, dass auch zwischen dem Netzstecker und dem Anschlusskabel ein dem zuvor beschriebenen Verbinder ähnlicher Verbinder eingefügt ist. Hierbei ist es dann möglich, das Anschlusskabel über diesen weiteren Verbinder mit hinsichtlich kabelseitig unterschiedlichen Anschlussbuchsen versehenen Netzsteckern zu verbinden. Auch hierbei wird an einer Seite eines entsprechenden weiteren Verbinders das Anschlusskabel in den Verbinder eingefügt und mit diesem elektrisch verbunden und an der anderen Seite ein jeweils zur Anschlussbuchse des Netzsteckers passender Stecker in den entsprechenden Verbinder eingefügt und mit diesem elektrisch verbunden. Bei der zuletzt beschriebenen Ausbildungsform ist es darüber hinaus möglich, das Schaltnetzteil nicht in dem Netzstecker, sondern in dem diesen mit dem Anschlusskabel verbindenden weiteren Verbinder anzuordnen.

Was die weiter oben angesprochenen Halteelemente zur mechanischen Fixierung einerseits des Anschlusskabels und andererseits des GAS (oder, im Falle eines weiteren zwischen Kabel und Netzstecker angeordneten Verbinders, zu Fixierung des Anschlusskabels sowie des zu einer Anschlussbuchse des Netzsteckers passenden Steckers) anbelangt, so sind für deren konkrete Ausbildung selbstverständlich unterschiedliche Möglichkeiten gegeben. Eine Möglichkeit besteht dabei darin, dass im Bereich des jeweiligen Kabelendes und des verbinderseitigen Endes des GAS (oder des mit diesem vergleichbaren, mit dem Netzstecker zu verbindenden Steckers) jeweils mindestens ein im Wesentlichen radial seitlich nach außen ragendes Fähnchen respektive stegartiges Element ausgebildet ist, welches jeweils mit je einer Nut oder mit einer einzigen umlaufenden Nut im Inneren des (jeweiligen) Verbinders in Eingriff gebracht wird. Soweit das Kabelende oder der GAS (respektive der mit der kabelseitigen Anschlussbuchse des Netzsteckers kompatible Stecker) nur ein solches stegartiges Element aufweisen, kann auch dieses als ein auf ihrer Außenseite umlaufendes stegförmiges Element ausgebildet sein. Darüber hinaus kann ein jeweiliges stegförmiges Element oder können die stegförmigen Elemente an seinem/ihren freien Ende(n) einen Widerhaken aufweisen, der sich in einer komplementären Nut im Inneren des (jeweiligen) Verbinders verhakt.

Zur der vorgeschlagenen Lösung soll nachfolgend ein Ausführungsbeispiel gegeben und anhand von Zeichnungen erläutert werden. Die Zeichnungen zeigen im Einzelnen:
- Fig. 1:: ein Ende des Anschlusskabels der Ladeeinrichtung,
- Fig. 2:: das an dem Verbinder fixierte Kabelende gemäß Fig. 1,
- Fig. 3:: den Verbinder gemäß Fig. 2 mit daran fixiertem Kabelende und GAS.

In den Zeichnungen und den nachfolgend zu diesen gegebenen Erläuterungen wird jeweils davon ausgegangen, dass es sich bei dem (jeweils nicht gezeigten) Netzteil um ein Schaltnetzteil handelt.

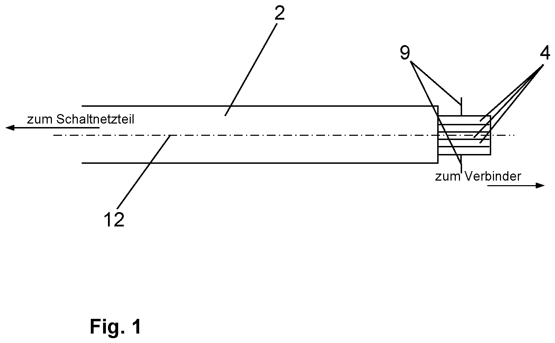

Die Fig. 1 zeigt in einer stark schematisierten Darstellung ein Kabelende eines zu der Ladeeinrichtung gehörenden Anschlusskabels (Kabel 2). Das Kabel 2 weist mehrere elektrische Adern 4 (elektrische Leiter) auf, die (in der Zeichnung nicht erkennbar) an ihren Enden in einem sehr kurzen Bereich (0,2 - 0,4 mm) abisoliert sind. Die Darstellung von nur drei Adern 4 des Kabels 2 in der stark schematisierten Zeichnung dient dabei lediglich der Vereinfachung und ist insoweit nicht repräsentativ. Vielmehr kann und wird häufig das Kabel 2 auch mehr als drei Adern aufweisen.

An einer die Adern 4 im Inneren des Kabelmantels nochmals umgebenden, beispielsweise aus Gummi bestehenden schlauchartigen Hülle sind (im Beispiel 2) nach außen ragende Fähnchen respektive stegförmige Elemente als Halteelemente 9 ausgebildet, deren freie Enden gegebenenfalls (mit hier nicht gezeigten) Widerhaken ausgestattet sein können.

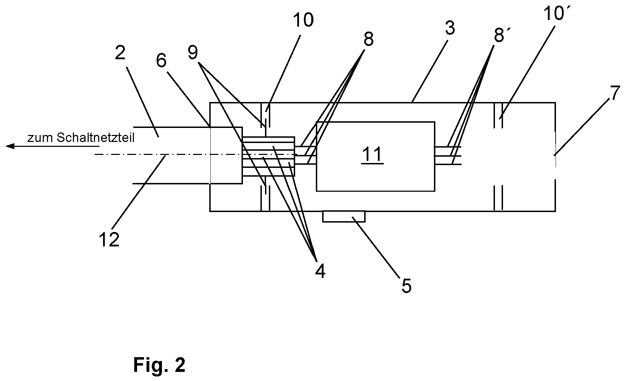

Die Fig. 2 zeigt das in der der Fig. 1 dargestellte Kabelende, welches in den gemäß der Erfindung vorgesehenen Verbinder 3 eingelegt und an diesem mechanisch fixiert sowie mit ihm elektrisch verbunden ist. In der Darstellung ist insoweit nur das geräteseitige Ende respektive das verbinderseitige Ende des Anschlusskabels (Kabel 2) gezeigt, nicht aber dessen anderes, mit dem ebenfalls nicht gezeigten Netzstecker verbundene (zu verbindende) Kabelende. Auch auf die Darstellung des MEG, wie beispielsweise eines Smartphones wurde hier ebenso wie in der Fig. 1 verzichtet.

Zur elektrischen Verbindung weist der Verbinder 3 in seinem Inneren mehrere galvanische Kontakte 8, 8' auf. Auf diese Kontakte 8, 8' sind die abisolierten Enden der Adern 4 des Anschlusskabels (Kabel 2) aufgelegt worden, wobei gleichzeitig die an dem Kabel 2 ausgebildeten, sich radial zu dessen Längsachse 12 erstreckenden Halteelemente 9 mit komplementären, im Inneren des Verbinders 3 ausgebildeten Halteelementen 10 in Eingriff gebracht worden sind. Über die galvanischen Kontakte 8 ist das Kabelende mit einem im Inneren des Verbinders 3 ausgebildeten Controller 11 respektive einer Controller-Schaltung verbunden, welche wiederum über weitere galvanische Kontakte 8' des Verbinders 3 mit einem hier noch nicht eingefügten GAS 1 verbindbar ist.

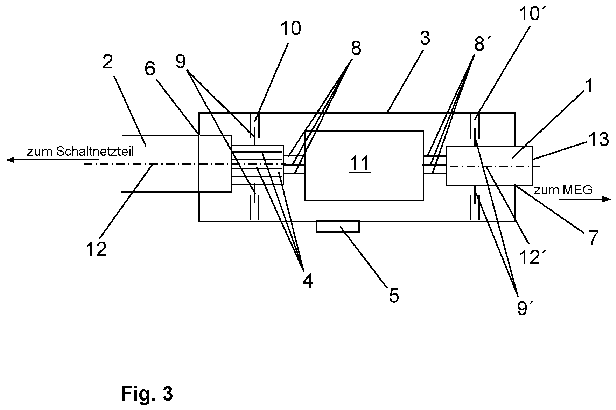

Letzteres, nämlich die Verbindung zwischen einem GAS 1, wie beispielsweise einem USB-C-Platinenstecker, und dem erfindungsgemäßen Verbinder 3 ist in der Fig. 3 dargestellt. Über den Verbinder 3 und den darin ausgebildeten Controller 11 (die Controller-Schaltung) sind das Kabel 2 und der GAS 1 miteinander verbunden. Auch der GAS 1 weist Halteelemente 9' auf, die sich radial zu seiner Längsachse 12' erstrecken und mit komplementären Halteelementen 10' des Verbinders 3 in Eingriff gebracht sind.

## Patentansprüche

1. Ladeeinrichtung zum Laden eines von einem mobilen Endgerät MEG aufgenommenen, dieses MEG mit Energie für seinen Betrieb versorgenden Akkumulators, mit einem Netzstecker und einem Netzteil zur Wandlung einer dem Netzteil über den Netzstecker zugeführten Netzspannung in eine Gerätekleinspannung, mit einem gerätespezifischen, zu einer Anschlussbuchse des MEG mechanisch und elektrisch kompatiblen Geräteanschlussstecker GAS (1) und mit einem Kabel (2), nämlich einem mehradrigen Anschlusskabel zur elektrischen Verbindung eines Ausgangs des Netzteils mit dem GAS (1), **dadurch gekennzeichnet, dass** die Ladeeinrichtung derart modular ausgebildet ist, dass die Verbindung zwischen dem Kabel (2) und dem GAS (1) über einen sowohl mit dem Kabel (2) als auch mit dem GAS (1) lösbar verbundenen, durch Entriegelung eines Ver- und Entriegelungselementes (5) zu öffnenden Verbinder (3) hergestellt ist, welcher an einer Seite eine Kabeleinführung (6) und an einer anderen Seite eine Durchführung (7) für den zur Herstellung einer Verbindung mit der Anschlussbuchse des MEG mit einem geräteseitigen Ende (13) aus dem Verbinder (3) herausragenden, austauschbaren GAS (1) aufweist und welcher in seinem Inneren galvanische Kontakte (8) zur elektrischen Verbindung eines bei geöffnetem Verbinder (3) in diesen eingelegten und mit abisolierten Enden seiner Adern (4) auf diese galvanischen Kontakte (8) aufgelegten Kabelendes sowie galvanische Kontakte (8') zur elektrischen Verbindung des bei geöffnetem Verbinder (3) in diesen eingelegten und mit an einem verbinderseitigen Ende ausgebildeten Kontaktpunkten auf diese galvanischen Kontakte (8') aufgelegten GAS (1) aufweist, wobei das Kabelende und der GAS (1) nach ihrer elektrischen Verbindung mit dem Verbinder (3) und dem Schließen des Verbinders (3) mittels sowohl an dem Kabelende als auch an dem verbinderseitigen Ende des GAS (1) ausgebildeter sowie jeweils mit komplementären im Inneren des Verbinders (3) ausgebildeten Halteelementen (10, 10') in Eingriff gebrachter Haltelemente (9, 9') mechanisch an dem Verbinder (3) fixiert sind.

2. Ladeeinrichtung nach Anspruch 1, **dadurch gekennzeichnet, dass** das Netzteil als Schaltnetzteil ausgebildet ist.

3. Ladeeinrichtung nach Anspruch 1 oder 2, **dadurch gekennzeichnet, dass** in dem Verbinder (3) ein zumindest zur Begrenzung und Überwachung des Ladestroms des Akkumulators bei einem Ladevorgang ausgebildeter Controller (11) angeordnet ist, wobei die elektrische Verbindung des an dem Verbinder (3) fixierten Kabelendes und des GAS (1) über diesen Controller (11) hergestellt ist.

4. Ladeeinrichtung nach einem der Ansprüche 1 bis 3, **dadurch gekennzeichnet, dass** jeweils als Halteelement (9, 9') sowohl am Ende des Kabels (2) als auch an dem GAS (1) mindestens ein von einer Außenfläche, im Wesentlichen radial zu ihrer Längsachse (12, 12') aufragendes stegförmiges Element angeordnet ist, welches mit jeweils einer an der Innenseite des Verbinders (3) ausgebildeten Nut in Eingriff gebracht ist.

5. Ladeeinrichtung nach Anspruch 4, **dadurch gekennzeichnet, dass** an dem Kabelende und/oder an dem verbinderseitigen Ende des GAS (1) ein Halteelement (9, 9') in Form eines auf der Außenfläche umlaufenden Steges ausgebildet ist.

6. Ladeeinrichtung nach Anspruch 4 oder 5 **dadurch gekennzeichnet, dass** als jeweils komplementäres Halteelement (10, 10') zu dem mindestens einen Halteelement (9, 9') des Kabelendes und/oder des GAS (1) eine an der Verbinderinnenseite umlaufende Nut ausgebildet ist.

7. Ladeeinrichtung nach einem der Ansprüche 4 bis 6, **dadurch gekennzeichnet, dass** das mindestens eine, als Haltelement (9, 9') fungierende stegförmige Element des Kabelendes und/oder des GAS (1) an seinem freien Ende mit einem Widerhaken versehen ist, der sich beim Fixieren am Verbinder (3) in der das jeweils komplementäre Haltelement (10, 10') ausbildenden Nut der Verbinderinnenseite verhakt.

8. Ladeeinrichtung nach einem der Ansprüche 1 bis 7, **dadurch gekennzeichnet, dass** die Kabeleinführung (6) des Verbinders (3) und die Durchführung (7) für den GAS (1) einander gegenüberliegend oder orthogonal zueinander angeordnet sind.

9. Ladeeinrichtung nach einem der Ansprüche 2 bis 8, **dadurch gekennzeichnet, dass** der Netzstecker und das andere Ende des Kabels (2) über einen weiteren, vergleichbar mit dem Verbinder (3) ausgebildeten Verbinder elektrisch und mechanisch lösbar miteinander verbunden sind.

10. Ladeeinrichtung nach einem der Ansprüche 2 bis 9, **dadurch gekennzeichnet, dass** das Schaltnetzteil innerhalb des Netzsteckers ausgebildet ist.

11. Ladeeinrichtung nach Anspruch 9, **dadurch gekennzeichnet, dass** das Schaltnetzteil in dem weiteren, zwischen dem Netzstecker und dem anderen Ende des Kabels (2) eingefügten Verbinder ausgebildet ist.
